# EUROPEAN PATENT APPLICATION

(11) **EP 4 782 969 A1**
(43) Date of publication of application: **29.07.2026**
(21) Application number: 26152580.2
(22) Date of filing: 19.01.2026
(51) Int. Cl.: G06F 3/01

(54) **WRIST-LOCKED VIRTUAL OBJECT ACCESSIBILITY IN AN ARTIFICIAL REALITY ENVIRONMENT**

(30) Priority: 23.01.2025 US 202519035403
(71) Applicant: Meta Platforms Technologies, LLC, Menlo Park, CA 94025 (US)
(72) Inventor: VICTOR-FAICHNEY, Anastasia, Menlo Park, 94025 (US); LANE, Nathaniel, Menlo Park, 94025 (US); NIKRAVESH, Ali, Menlo Park, 94025 (US); PARK, Dong Yoon, Menlo Park, 94025 (US)
(74) Representative: Murgitroyd & Company

(57) **Abstract**

Aspects of the present disclosure are directed to wrist- or forearm-locked virtual objects providing access to artificial reality (XR) system-level and/or application-level actions and/or functions. A virtual button (or multiple buttons) can appear at a particular location on a user's wrist, such as on the inside of the wrist when the wrist is rotated toward the user's face. The virtual button can be used to access a menu of available options, functions, or other actions with a single tap, or provide other controls with other tap types (e.g., multiple taps, long press, etc.). In some implementations, different buttons providing access to different functions can be placed on different wrists.

## Description

### TECHNICAL FIELD

The present disclosure is directed to a wrist-locked virtual object system that can control virtual objects that appear on the inside of a user's wrist, in an artificial reality (XR) environment, when the wrist is rotated toward the user's face.

### BACKGROUND

Artificial reality (XR) devices are becoming more prevalent. As they become more popular, the applications implemented on such devices are becoming more sophisticated. Artificial reality applications can provide interactive 3D experiences that combine images of the real-world with virtual objects or that provide an entirely self-contained 3D computer environment. For example, an AR application can be used to superimpose virtual objects over a video feed of a real scene that is observed by a camera. A real-world user in the scene can then make gestures captured by the camera that can provide interactivity between the real-world user and the virtual objects. Mixed reality systems can allow light to enter a user's eye that is partially generated by a computing system and partially includes light reflected off objects in the real-world. AR, MR, and VR experiences (together XR) can be observed by a user through a head-mounted display (HMD), such as glasses or a headset.

As XR technology has evolved, so has the number of inputs available to users. With the growing adoption of hand input, intuitive system controls with hands are needed. Some technologies can provide for gesture-based quick action menus which can allow users to access common actions via a sequence of hand gestures. For a lightweight alternative, some implementations described herein can allow users to quickly access primary actions with minimal effort via virtual wrist buttons. In some implementations, the user can be provided with two virtual buttons, placed within a threshold distance of where the wrist and the palm of the hand meet, which can provide commonly used shortcuts. The user can interact with the virtual buttons via direct touch, pressing directly on the button with their opposing finger. In one arrangement (which can be a default arrangement in some implementations), the wrist button on the user's right arm can provide access to system functions and/or settings, while the wrist button on the user's left arm can provide access to application functions and/or settings. This can create parity to hardware controllers, allowing users to quickly access familiar controller actions with hands input, eliminating the need for hardware controllers while minimizing confusion. Thus, some implementations described herein can provide a seamless transition from XR technology using hardware controllers to hand input without controllers, reducing the amount of hardware needed to experience XR environments and without negatively affecting the user experience. The implementations described herein provide specific technological improvements in the field of artificial reality (XR).

### SUMMARY OF INVENTION

In an aspect of the invention, a method for providing wrist- or forearm-locked virtual object accessibility in an artificial reality (XR) environment comprises: detecting, by an XR system and in a real-world environment, a wrist or forearm, of a user, within a threshold distance of a field-of-view of the XR system; in response to the detecting of the wrist or forearm within the threshold distance of the field-of-view of the XR system, displaying a first virtual object locked to a representation of the wrist or forearm of the user in the XR environment; detecting an intent to interact with the first virtual object by a hand of the user; and based on the detecting of the intent to interact with the first virtual object by the hand, displaying a second virtual object, associated with the first virtual object, in the XR environment.

In embodiments, the second virtual object is a virtual menu providing access to one or more functions of the XR system or one or more functions of an XR application executing in the XR environment.

In embodiments, the hand is on a different arm of a body, of the user, from the wrist.

In embodiments, the detected intent to interact is a tap by the hand on the first virtual object.

In embodiments, the hand is on a same arm of a body, of the user, as the wrist or forearm, and the detected intent is based on a gesture made by the hand.

In embodiments, the gesture is a pinch gesture by the hand.

In embodiments, detecting the intent to interact with the first virtual object includes determining a duration of the intent to interact with the first virtual object, and the method further comprises selecting the second virtual object based on the duration of the interaction with the first virtual object.

In embodiments, the determining the duration of the intent to interact includes determining that the duration exceeds a threshold, and the selected second virtual object is a rendering of the XR environment recentered based on a position of a head of the user while the intent to interact is detected.

In embodiments, the first virtual object is mapped to a physical button on a controller of the XR system.

In embodiments, the intent to interact with the first virtual object is a first intent to interact, and the method further comprises: detecting a second intent to interact with the first virtual object by the hand of the user; and based on the detecting the second intent to interact with the first virtual object, ceasing display of the second virtual object in the XR environment.

In embodiments, a location of the displayed first virtual object is locked to a location based on a location of the representation of the wrist in the XR environment.

In embodiments, the first virtual object is selected based on a determination of which wrist or forearm is detected.

In embodiments, the first virtual object is displayed further based on detection of greater than a threshold amount of a palm of the user facing the XR system.

In embodiments, the XR environment includes interactive content, and the method further comprises ceasing rendering of a portion of the interactive content, within a threshold distance of the first virtual object, while the first virtual object is displayed.

In another aspect of the invention, a computer-readable storage medium is provided storing instructions, for providing wrist- or forearm-locked virtual object accessibility in an artificial reality (XR) environment, the instructions, when executed by a computing system, cause the computing system to: detect, by an XR system and in a real-world environment, a wrist or forearm, of a user, within a threshold distance of a field-of-view of the XR system; in response to the detecting of the wrist or forearm within the threshold distance of the field-of-view of the XR system, display a virtual object locked to a representation of the wrist or forearm of the user in the XR environment; detect an intent to interact with the virtual object by a hand of the user; and based on the detecting of the intent to interact with the virtual object by the hand, perform an action, associated with the virtual object, in the XR environment.

In embodiments, the action includes recentering a view of the XR environment, on the XR system, based on a head pose of the user.

In embodiments, the recentering of the view is performed, upon completion of a countdown, based on the head pose of the user at the end of the countdown.

In embodiments, the action includes initiating a recentering process while the intent to interact is detected, and the recentering process is canceled when the intent to interact is no longer detected.

In embodiments, the virtual object is a first virtual object, and the action includes displaying a second virtual object, associated with the first virtual object, in the XR environment.

In embodiments, the computer-readable storage medium is provided to perform the method hereinabove described. Thus, a computer-readable storage medium is provided storing instructions, for providing wrist- or forearm-locked virtual object accessibility in an artificial reality (XR) environment, the instructions, when executed by a computing system, cause the computing system to perform any embodiment of the method herein described.

In another aspect of the invention, a computing system is provided for providing wrist- or forearm-locked virtual object accessibility in an artificial reality (XR) environment, the computing system comprising one or more processors and one or more memories storing instructions that, when executed by the one or more processors, cause the computing system to: detect, by an XR system and in a real-world environment, a wrist or forearm, of a user, within a threshold distance of a field-of-view of the XR system; in response to the detecting of the wrist or forearm within the threshold distance of the field-of-view of the XR system, display a virtual object locked to a representation of the wrist or forearm of the user in the XR environment; detect an intent to interact with the virtual object by a hand of the user; and based on the detecting of the intent to interact with the virtual object by the hand, perform an action, associated with the virtual object, in the XR environment.

In embodiments, the action includes recentering a view of the XR environment, on the XR system, based on a head pose of the user.

In embodiments, the recentering of the view is performed, upon completion of a countdown, based on the head pose of the user at the end of the countdown.

In embodiments, the action includes initiating a recentering process while the intent to interact is detected, and the recentering process is canceled when the intent to interact is no longer detected.

In embodiments, the virtual object is a first virtual object, and the action includes displaying a second virtual object, associated with the first virtual object, in the XR environment.

In embodiments, the computing system is provided to perform the method hereinabove described. Thus, a computing system is provided for providing wrist- or forearm-locked virtual object accessibility in an artificial reality (XR) environment, the computing system comprising one or more processors and one or more memories storing instructions that, when executed by the one or more processors, cause the computing system to perform any embodiment of the method herein described.

In a further aspect, a method for providing wrist- or forearm-locked virtual object accessibility in an artificial reality (XR) environment comprises: detecting, by an XR system and in a real-world environment, a wrist or forearm, of a user, within a threshold distance of a field-of-view of the XR system; in response to the detecting of the wrist or forearm within the threshold distance of the field-of-view of the XR system, displaying a first virtual object locked to a representation of the wrist or forearm of the user in the XR environment; detecting an intent to interact with the first virtual object by a hand of the user; and based on the detecting of the intent to interact with the first virtual object by the hand, performing an action, associated with the virtual object, in the XR environment.

In embodiments, the action includes recentering a view of the XR environment, on the XR system, based on a head pose of the user.

In embodiments, the recentering of the view is performed, upon completion of a countdown, based on the head pose of the user at the end of the countdown.

In embodiments, the action includes initiating a recentering process while the intent to interact is detected, and the recentering process is canceled when the intent to interact is no longer detected.

In embodiments, the virtual object is a first virtual object, and the action includes displaying a second virtual object, associated with the first virtual object, in the XR environment.

A system or computer-readable storage medium in accordance with the invention may be to perform a method of the invention, and a method of the invention may be performed making use of a system or computer-readable storage medium, and preferred features of an aspect of the invention will be understood to apply to other such aspects where technically feasible.

### BRIEF DESCRIPTION OF THE DRAWINGS

Figure 1 is a block diagram illustrating an overview of devices on which some implementations of the present technology can operate.
Figure 2A is a wire diagram illustrating a virtual reality headset which can be used in some implementations of the present technology.
Figure 2B is a wire diagram illustrating a mixed reality headset which can be used in some implementations of the present technology.
Figure 2C is a wire diagram illustrating controllers which, in some implementations, a user can hold in one or both hands to interact with an artificial reality environment.
Figure 3 is a block diagram illustrating an overview of an environment in which some implementations of the present technology can operate.
Figure 4 is a block diagram illustrating components which, in some implementations, can be used in a system employing the disclosed technology.
Figure 5 is a flow diagram illustrating a process used in some implementations of the present technology for providing wrist- or forearm-locked virtual object accessibility in an artificial reality (XR) environment.
Figure 6A is a conceptual diagram illustrating an example view, on an XR system, of a virtual system button displayed when a user's wrist faces the user.
Figure 6B is a conceptual diagram illustrating an example view, on an XR system, of a user interacting with a virtual system button displayed when the user's wrist faces the user.
Figure 6C is a conceptual diagram illustrating an example view, on an XR system, of a virtual system menu displayed based on a user interaction with a virtual system button.
Figure 7A is a conceptual diagram illustrating an example view, on an XR system, of a user making a pinch gesture indicative of an intent to interact with a virtual application button displayed when a user's wrist faces the user.
Figure 7B is a conceptual diagram illustrating an example view, on an XR system, of a virtual application menu displayed based on a detected intent to interact with a virtual application button.

The techniques introduced here may be better understood by referring to the following Detailed Description in conjunction with the accompanying drawings, in which like reference numerals indicate identical or functionally similar elements.

### DETAILED DESCRIPTION

Aspects of the present disclosure are directed to a system providing wrist- or forearm-locked virtual objects that provide access to artificial reality (XR) system-level and/or application-level actions and/or functions. A virtual button (or multiple buttons) can appear at a particular location on a user's wrist, such as on the inside of the wrist when the wrist is rotated toward the user's face. The virtual button can be used to access a menu of available options, functions, or other actions with a single tap, or provide other controls with other tap types (e.g., multiple taps, long press, etc.). In some implementations, different buttons, that provide access to different functions, can be placed on different wrists.

For example, a virtual object accessibility system, on an XR system, can provide two virtual buttons: a system button where (or near) the right wrist and the palm of the right hand meet, and an application button where (or near) the left wrist and the palm of the left hand meet. The virtual buttons can be displayed when the XR system detects that the corresponding wrist is facing the user, e.g., by determining that a threshold amount of the corresponding palm is showing or based on a determined amount of rotation of the wrist/forearm. In some implementations, two interactions can be performed on the system button (e.g., a single tap or press, or a long press), while one interaction can be performed on the application button (e.g., a single tap or press). The presses can be performed, e.g., by the opposing hand's index finger. A single tap or press (e.g., duration of press less than 500 ms) on the application button can show or hide an application user interface (UI) menu defined by the currently open application in the XR environment. A single tap or press (e.g., duration of press less than 500 ms) on the system button can show or hide a system UI menu, which can be mapped to the same function as pressing a physical system button on a physical controller of the XR system, thereby creating parity to the interaction required on the same input (e.g., a single press of the virtual or physical button).

A long press on the system button can initiate a recentering process. When the user recenters, the XR environment and UI can reorient itself based on the user's head pose. In some implementations, the recentering action is not immediate when the recentering signal is received by the system; instead, a countdown can occur once the recentering process has begun. The user can then orient their head pose to the desired location of the recenter action. In some implementations, the user must hold down the system button for the duration of the recenter process. If the user terminates the interaction in the middle of the recentering process, the recentering can be canceled.

If it's not comfortable for users to perform interactions with two hands, the interactions can instead be performed with a single hand in some implementations. With the conditions met to make the wrist button appear, the user can pinch their index finger and thumb together on the hand on the same arm as the visible wrist button to perform the same wrist button actions. For example, the user can perform a quick pinch to have the same effect as a short press, or a long pinch to have the same effect as a long press. With regard to the system button, the actions of show/hide system UI menu and recentering can occur respectively. Depending on which hand performs the single hand interaction (e.g., a pinch), the corresponding wrist button action(s) can occur, e.g., if the dominant hand performs the pinch, the system button action is called.

Embodiments of the disclosed technology may include or be implemented in conjunction with an artificial reality system. Artificial reality or extra reality (XR) is a form of reality that has been adjusted in some manner before presentation to a user, which may include, e.g., virtual reality (VR), augmented reality (AR), mixed reality (MR), hybrid reality, or some combination and/or derivatives thereof. Artificial reality content may include completely generated content or generated content combined with captured content (e.g., real-world photographs). The artificial reality content may include video, audio, haptic feedback, or some combination thereof, any of which may be presented in a single channel or in multiple channels (such as stereo video that produces a three-dimensional effect to the viewer). Additionally, in some embodiments, artificial reality may be associated with applications, products, accessories, services, or some combination thereof, that are, e.g., used to create content in an artificial reality and/or used in (e.g., perform activities in) an artificial reality. The artificial reality system that provides the artificial reality content may be implemented on various platforms, including a head-mounted display (HMD) connected to a host computer system, a standalone HMD, a mobile device or computing system, a "cave" environment or other projection system, or any other hardware platform capable of providing artificial reality content to one or more viewers.

"Virtual reality" or "VR," as used herein, refers to an immersive experience where a user's visual input is controlled by a computing system. "Augmented reality" or "AR" refers to systems where a user views images of the real world after they have passed through a computing system. For example, a tablet with a camera on the back can capture images of the real world and then display the images on the screen on the opposite side of the tablet from the camera. The tablet can process and adjust or "augment" the images as they pass through the system, such as by adding virtual objects. "Mixed reality" or "MR" refers to systems where light entering a user's eye is partially generated by a computing system and partially composes light reflected off objects in the real world. For example, a MR headset could be shaped as a pair of glasses with a pass-through display, which allows light from the real world to pass through a waveguide that simultaneously emits light from a projector in the MR headset, allowing the MR headset to present virtual objects intermixed with the real objects the user can see. "Artificial reality," "extra reality," or "XR," as used herein, refers to any of VR, AR, MR, or any combination or hybrid thereof.

The implementations described herein provide specific technological improvements in the field of artificial reality (XR). As XR technology has evolved, so has the number of inputs available to users. With the growing adoption of hand input, intuitive system controls with hands are needed. Some technologies can provide for gesture-based quick action menus which can allow users to access common actions via a sequence of hand gestures. For a lightweight alternative, some implementations described herein can allow users to quickly access primary actions with minimal effort via virtual wrist buttons. In some implementations, the user can be provided with two virtual buttons, placed within a threshold distance of where the wrist and the palm of the hand meet, which can provide commonly used shortcuts. The user can interact with the virtual buttons via direct touch, pressing directly on the button with their opposing finger. In one arrangement (which can be a default arrangement in some implementations), the wrist button on the user's right arm can provide access to system functions and/or settings, while the wrist button on the user's left arm can provide access to application functions and/or settings. This can create parity to hardware controllers, allowing users to quickly access familiar controller actions with hands input, eliminating the need for hardware controllers while minimizing confusion. Thus, some implementations described herein can provide a seamless transition from XR technology using hardware controllers to hand input without controllers, reducing the amount of hardware needed to experience XR environments and without negatively affecting the user experience.

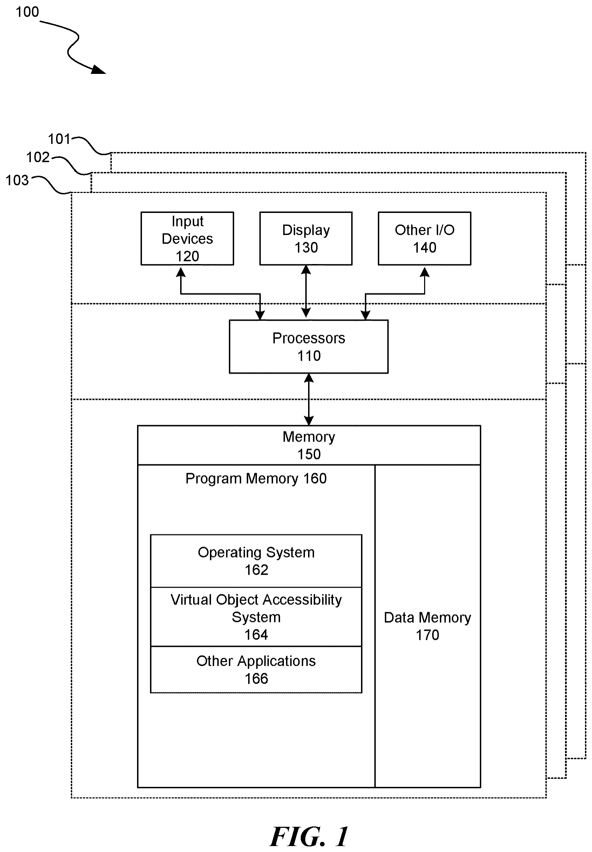

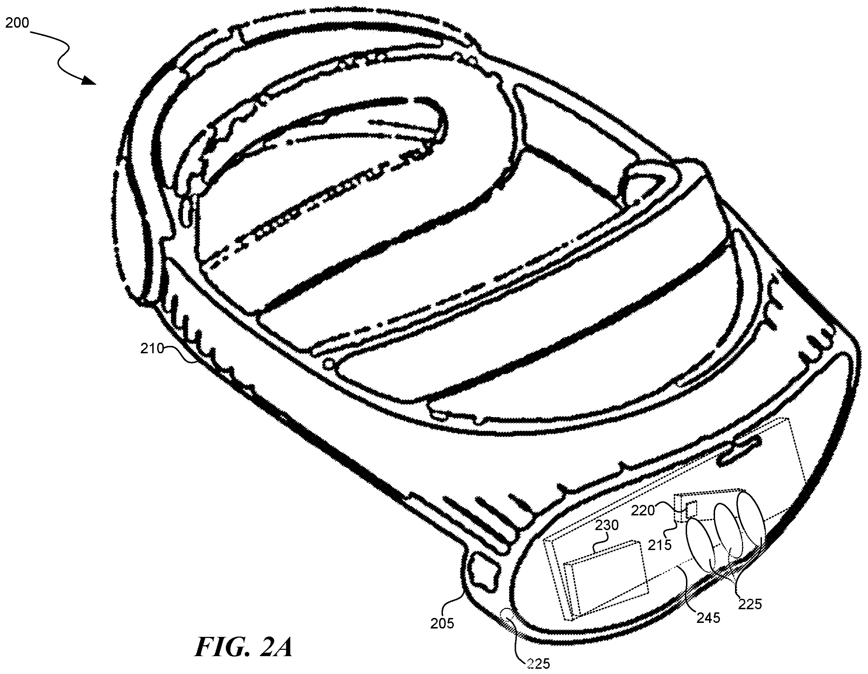

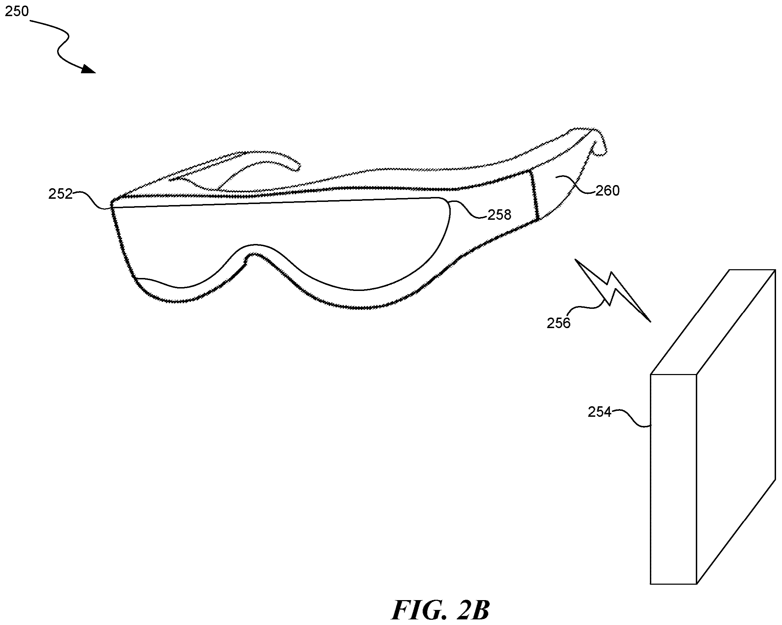

Several implementations are discussed below in more detail in reference to the figures. Figure 1 is a block diagram illustrating an overview of devices on which some implementations of the disclosed technology can operate. The devices can comprise hardware components of a computing system 100 that can provide wrist- or forearm-locked virtual object accessibility in an artificial reality (XR) environment. In various implementations, computing system 100 can include a single computing device 103 or multiple computing devices (e.g., computing device 101, computing device 102, and computing device 103) that communicate over wired or wireless channels to distribute processing and share input data. In some implementations, computing system 100 can include a stand-alone headset capable of providing a computer created or augmented experience for a user without the need for external processing or sensors. In other implementations, computing system 100 can include multiple computing devices such as a headset and a core processing component (such as a console, mobile device, or server system) where some processing operations are performed on the headset and others are offloaded to the core processing component. Example headsets are described below in relation to Figures 2A and 2B. In some implementations, position and environment data can be gathered only by sensors incorporated in the headset device, while in other implementations one or more of the non-headset computing devices can include sensor components that can track environment or position data.

Computing system 100 can include one or more processor(s) 110 (e.g., central processing units (CPUs), graphical processing units (GPUs), holographic processing units (HPUs), etc.) Processors 110 can be a single processing unit or multiple processing units in a device or distributed across multiple devices (e.g., distributed across two or more of computing devices 101-103).

Computing system 100 can include one or more input devices 120 that provide input to the processors 110, notifying them of actions. The actions can be mediated by a hardware controller that interprets the signals received from the input device and communicates the information to the processors 110 using a communication protocol. Each input device 120 can include, for example, a mouse, a keyboard, a touchscreen, a touchpad, a wearable input device (e.g., a haptics glove, a bracelet, a ring, an earring, a necklace, a watch, etc.), a camera (or other light-based input device, e.g., an infrared sensor), a microphone, or other user input devices.

Processors 110 can be coupled to other hardware devices, for example, with the use of an internal or external bus, such as a PCI bus, SCSI bus, or wireless connection. The processors 110 can communicate with a hardware controller for devices, such as for a display 130. Display 130 can be used to display text and graphics. In some implementations, display 130 includes the input device as part of the display, such as when the input device is a touchscreen or is equipped with an eye direction monitoring system. In some implementations, the display is separate from the input device. Examples of display devices are: an LCD display screen, an LED display screen, a projected, holographic, or augmented reality display (such as a heads-up display device or a head-mounted device), and so on. Other I/O devices 140 can also be coupled to the processor, such as a network chip or card, video chip or card, audio chip or card, USB, firewire or other external device, camera, printer, speakers, CD-ROM drive, DVD drive, disk drive, etc.

In some implementations, input from the I/O devices 140, such as cameras, depth sensors, IMU sensor, GPS units, LiDAR or other time-of-flights sensors, etc. can be used by the computing system 100 to identify and map the physical environment of the user while tracking the user's location within that environment. This simultaneous localization and mapping (SLAM) system can generate maps (e.g., topologies, grids, etc.) for an area (which may be a room, building, outdoor space, etc.) and/or obtain maps previously generated by computing system 100 or another computing system that had mapped the area. The SLAM system can track the user within the area based on factors such as GPS data, matching identified objects and structures to mapped objects and structures, monitoring acceleration and other position changes, etc.

Computing system 100 can include a communication device capable of communicating wirelessly or wire-based with other local computing devices or a network node. The communication device can communicate with another device or a server through a network using, for example, TCP/IP protocols. Computing system 100 can utilize the communication device to distribute operations across multiple network devices.

The processors 110 can have access to a memory 150, which can be contained on one of the computing devices of computing system 100 or can be distributed across of the multiple computing devices of computing system 100 or other external devices. A memory includes one or more hardware devices for volatile or non-volatile storage, and can include both read-only and writable memory. For example, a memory can include one or more of random access memory (RAM), various caches, CPU registers, read-only memory (ROM), and writable non-volatile memory, such as flash memory, hard drives, floppy disks, CDs, DVDs, magnetic storage devices, tape drives, and so forth. A memory is not a propagating signal divorced from underlying hardware; a memory is thus non-transitory. Memory 150 can include program memory 160 that stores programs and software, such as an operating system 162, virtual object accessibility system 164, and other application programs 166. Memory 150 can also include data memory 170 that can include, e.g., body part identification data, rendering data, virtual object data, menu data, interaction data, intent data, configuration data, settings, user options or preferences, etc., which can be provided to the program memory 160 or any element of the computing system 100.

In various implementations, the technology described herein can include a non-transitory computer-readable storage medium storing instructions, the instructions, when executed by a computing system, cause the computing system to perform steps as shown and described herein. In various implementations, the technology described herein can include a computing system comprising one or more processors and one or more memories storing instructions that, when executed by the one or more processors, cause the computing system to steps as shown and described herein.

Some implementations can be operational with numerous other computing system environments or configurations. Examples of computing systems, environments, and/or configurations that may be suitable for use with the technology include, but are not limited to, XR headsets, personal computers, server computers, handheld or laptop devices, cellular telephones, wearable electronics, gaming consoles, tablet devices, multiprocessor systems, microprocessor-based systems, set-top boxes, programmable consumer electronics, network PCs, minicomputers, mainframe computers, distributed computing environments that include any of the above systems or devices, or the like.

Figure 2A is a wire diagram of a virtual reality head-mounted display (HMD) 200, in accordance with some embodiments. In this example, HMD 200 also includes augmented reality features, using passthrough cameras 225 to render portions of the real world, which can have computer generated overlays. The HMD 200 includes a front rigid body 205 and a band 210. The front rigid body 205 includes one or more electronic display elements of one or more electronic displays 245, an inertial motion unit (IMU) 215, one or more position sensors 220, cameras and locators 225, and one or more compute units 230. The position sensors 220, the IMU 215, and compute units 230 may be internal to the HMD 200 and may not be visible to the user. In various implementations, the IMU 215, position sensors 220, and cameras and locators 225 can track movement and location of the HMD 200 in the real world and in an artificial reality environment in three degrees of freedom (3DoF) or six degrees of freedom (6DoF). For example, locators 225 can emit infrared light beams which create light points on real objects around the HMD 200 and/or cameras 225 capture images of the real world and localize the HMD 200 within that real world environment. As another example, the IMU 215 can include e.g., one or more accelerometers, gyroscopes, magnetometers, other non-camera-based position, force, or orientation sensors, or combinations thereof, which can be used in the localization process. One or more cameras 225 integrated with the HMD 200 can detect the light points. Compute units 230 in the HMD 200 can use the detected light points and/or location points to extrapolate position and movement of the HMD 200 as well as to identify the shape and position of the real objects surrounding the HMD 200.

The electronic display(s) 245 can be integrated with the front rigid body 205 and can provide image light to a user as dictated by the compute units 230. In various embodiments, the electronic display 245 can be a single electronic display or multiple electronic displays (e.g., a display for each user eye). Examples of the electronic display 245 include: a liquid crystal display (LCD), an organic light-emitting diode (OLED) display, an active-matrix organic light-emitting diode display (AMOLED), a display including one or more quantum dot light-emitting diode (QOLED) sub-pixels, a projector unit (e.g., microLED, LASER, etc.), some other display, or some combination thereof.

In some implementations, the HMD 200 can be coupled to a core processing component such as a personal computer (PC) (not shown) and/or one or more external sensors (not shown). The external sensors can monitor the HMD 200 (e.g., via light emitted from the HMD 200) which the PC can use, in combination with output from the IMU 215 and position sensors 220, to determine the location and movement of the HMD 200.

Figure 2B is a wire diagram of a mixed reality HMD system 250 which includes a mixed reality HMD 252 and a core processing component 254. The mixed reality HMD 252 and the core processing component 254 can communicate via a wireless connection (e.g., a 60 GHz link) as indicated by link 256. In other implementations, the mixed reality system 250 includes a headset only, without an external compute device or includes other wired or wireless connections between the mixed reality HMD 252 and the core processing component 254. The mixed reality HMD 252 includes a pass-through display 258 and a frame 260. The frame 260 can house various electronic components (not shown) such as light projectors (e.g., LASERs, LEDs, etc.), cameras, eye-tracking sensors, MEMS components, networking components, etc.

The projectors can be coupled to the pass-through display 258, e.g., via optical elements, to display media to a user. The optical elements can include one or more waveguide assemblies, reflectors, lenses, mirrors, collimators, gratings, etc., for directing light from the projectors to a user's eye. Image data can be transmitted from the core processing component 254 via link 256 to HMD 252. Controllers in the HMD 252 can convert the image data into light pulses from the projectors, which can be transmitted via the optical elements as output light to the user's eye. The output light can mix with light that passes through the display 258, allowing the output light to present virtual objects that appear as if they exist in the real world.

Similarly to the HMD 200, the HMD system 250 can also include motion and position tracking units, cameras, light sources, etc., which allow the HMD system 250 to, e.g., track itself in 3DoF or 6DoF, track portions of the user (e.g., hands, feet, head, or other body parts), map virtual objects to appear as stationary as the HMD 252 moves, and have virtual objects react to gestures and other real-world objects.

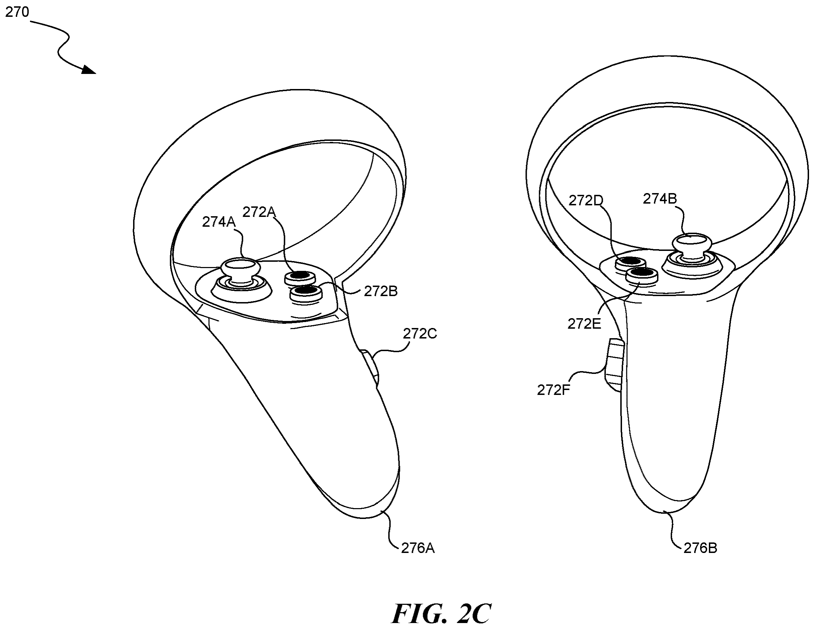

Figure 2C illustrates controllers 270 (including controller 276A and 276B), which, in some implementations, a user can hold in one or both hands to interact with an artificial reality environment presented by the HMD 200 and/or HMD 250. The controllers 270 can be in communication with the HMDs, either directly or via an external device (e.g., core processing component 254). The controllers can have their own IMU units, position sensors, and/or can emit further light points. The HMD 200 or 250, external sensors, or sensors in the controllers can track these controller light points to determine the controller positions and/or orientations (e.g., to track the controllers in 3DoF or 6DoF). The compute units 230 in the HMD 200 or the core processing component 254 can use this tracking, in combination with IMU and position output, to monitor hand positions and motions of the user. The controllers can also include various buttons (e.g., buttons 272A-F) and/or joysticks (e.g., joysticks 274A-B), which a user can actuate to provide input and interact with objects.

In various implementations, the HMD 200 or 250 can also include additional subsystems, such as an eye tracking unit, an audio system, various network components, etc., to monitor indications of user interactions and intentions. For example, in some implementations, instead of or in addition to controllers, one or more cameras included in the HMD 200 or 250, or from external cameras, can monitor the positions and poses of the user's hands to determine gestures and other hand and body motions. As another example, one or more light sources can illuminate either or both of the user's eyes and the HMD 200 or 250 can use eye-facing cameras to capture a reflection of this light to determine eye position (e.g., based on set of reflections around the user's cornea), modeling the user's eye and determining a gaze direction.

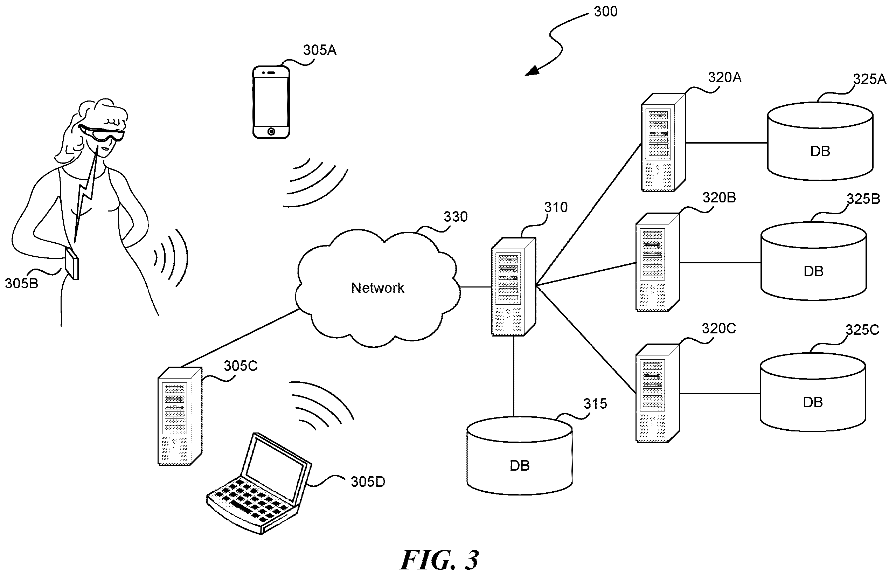

Figure 3 is a block diagram illustrating an overview of an environment 300 in which some implementations of the disclosed technology can operate. Environment 300 can include one or more client computing devices 305A-D, examples of which can include computing system 100. In some implementations, some of the client computing devices (e.g., client computing device 305B) can be the HMD 200 or the HMD system 250. Client computing devices 305 can operate in a networked environment using logical connections through network 330 to one or more remote computers, such as a server computing device.

In some implementations, server 310 can be an edge server which receives client requests and coordinates fulfillment of those requests through other servers, such as servers 320A-C. Server computing devices 310 and 320 can comprise computing systems, such as computing system 100. Though each server computing device 310 and 320 is displayed logically as a single server, server computing devices can each be a distributed computing environment encompassing multiple computing devices located at the same or at geographically disparate physical locations.

Client computing devices 305 and server computing devices 310 and 320 can each act as a server or client to other server/client device(s). Server 310 can connect to a database 315. Servers 320A-C can each connect to a corresponding database 325A-C. As discussed above, each server 310 or 320 can correspond to a group of servers, and each of these servers can share a database or can have their own database. Though databases 315 and 325 are displayed logically as single units, databases 315 and 325 can each be a distributed computing environment encompassing multiple computing devices, can be located within their corresponding server, or can be located at the same or at geographically disparate physical locations.

Network 330 can be a local area network (LAN), a wide area network (WAN), a mesh network, a hybrid network, or other wired or wireless networks. Network 330 may be the Internet or some other public or private network. Client computing devices 305 can be connected to network 330 through a network interface, such as by wired or wireless communication. While the connections between server 310 and servers 320 are shown as separate connections, these connections can be any kind of local, wide area, wired, or wireless network, including network 330 or a separate public or private network.

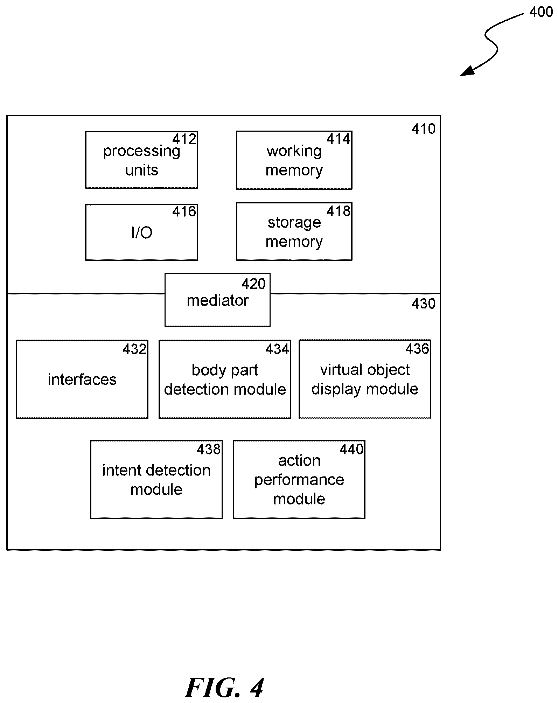

Figure 4 is a block diagram illustrating components 400 which, in some implementations, can be used in a system employing the disclosed technology. Components 400 can be included in one device of computing system 100 or can be distributed across multiple of the devices of computing system 100. The components 400 include hardware 410, mediator 420, and specialized components 430. As discussed above, a system implementing the disclosed technology can use various hardware including processing units 412, working memory 414, input and output devices 416 (e.g., cameras, displays, IMU units, network connections, etc.), and storage memory 418. In various implementations, storage memory 418 can be one or more of: local devices, interfaces to remote storage devices, or combinations thereof. For example, storage memory 418 can be one or more hard drives or flash drives accessible through a system bus or can be a cloud storage provider (such as in storage 315 or 325) or other network storage accessible via one or more communications networks. In various implementations, components 400 can be implemented in a client computing device such as client computing devices 305 or on a server computing device, such as server computing device 310 or 320.

Mediator 420 can include components which mediate resources between hardware 410 and specialized components 430. For example, mediator 420 can include an operating system, services, drivers, a basic input output system (BIOS), controller circuits, or other hardware or software systems.

Specialized components 430 can include software or hardware configured to perform operations for providing wrist- or forearm-locked virtual object accessibility in an artificial reality (XR) environment. Specialized components 430 can include body part detection module 434, virtual object display module 436, intent detection module 438, action performance module 440, and components and APIs which can be used for providing user interfaces, transferring data, and controlling the specialized components, such as interfaces 432. In some implementations, components 400 can be in a computing system that is distributed across multiple computing devices or can be an interface to a server-based application executing one or more of specialized components 430. Although depicted as separate components, specialized components 430 may be logical or other nonphysical differentiations of functions and/or may be submodules or code-blocks of one or more applications.

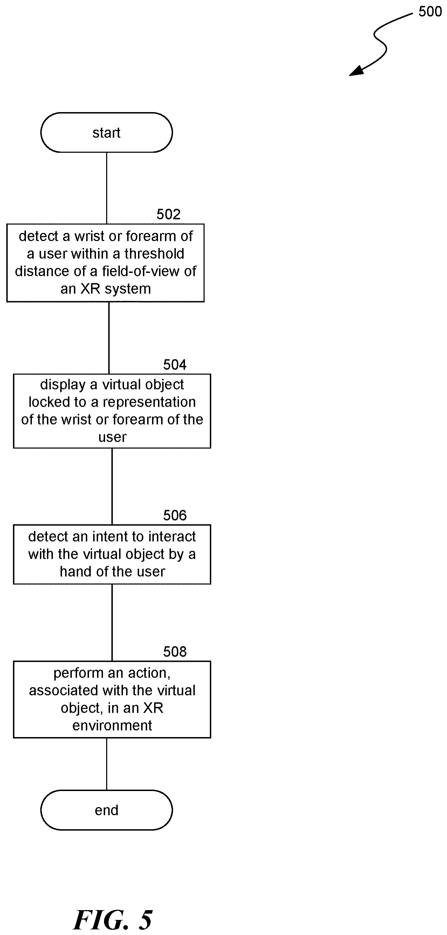

Body part detection module 434 can detect, in a real-world environment, a wrist and/or forearm, of a user, within a threshold distance of a field-of-view of the XR system. In some implementations, body part detection module 434 can only detect the presence of the wrist and/or forearm if a threshold amount of the wrist and/or forearm is visible by the XR system, e.g., within the view of one or more cameras integral with or in operable communication with the XR system. Body part detection module 434 can detect the wrist and/or forearm by any suitable method, such as by performing object recognition techniques on one or more images captured by such camera(s). In some implementations, body part detection module 434 can further detect a pose of the wrist and/or forearm, such as the wrist and/or forearm facing the user (and facing at least one camera of the XR system). In some implementations, body part detection module 434 can detect whether the wrist and/or forearm is pointing toward or away from the user by determining whether a threshold amount of a palm is visible by the XR system, such as by performing object recognition techniques to identify the palm. Further details regarding detecting, in a real-world environment, a wrist and/or forearm, of a user, within a threshold distance of a field-of-view of an XR system are described herein with respect to block 502 of Figure 5.

Virtual object display module 436 can, in response to body part detection module 434 detecting of the wrist and/or forearm within the threshold distance of the field-of-view of the XR system, display a virtual object locked to a representation of the wrist or forearm of the user in the XR environment. The virtual object can be positioned at any location on the representation of the wrist or forearm, i.e., at any point on or between the palm of the hand and the elbow, e.g., at a specified offset, down the middle of the forearm, from where the hand and forearm connect. The virtual object can be "locked" to such a position, such that the virtual object remains at that position on the wrist or forearm and correspondingly tracks movement of the wrist or forearm at that position. The representation of the wrist and/or forearm can include a view of the actual wrist and/or forearm (such as in augmented or mixed reality), a virtual wrist and/or forearm tracking movement of the physical wrist and/or forearm (such as in virtual reality), and/or any other virtual object mapped to the physical wrist and/or forearm (e.g., a virtual tree branch). Further details regarding displaying a virtual object locked to a representation of a wrist or forearm of a user in an XR environment are described herein with respect to block 504 of Figure 5.

Intent detection module 438 can detect an intent to interact with the virtual object, rendered by virtual object display module 436, by a hand of the user. In some implementations, the intent to interact with the virtual object can be the hand of the user (and/or representation of the hand of the user) "touching" the virtual object (e.g., the hand or representation of the hand contacting a location in the XR environment corresponding to or overlapping with a location of the virtual object in the XR environment) and/or coming within a threshold distance of the virtual object (e.g., within 2 cm). In some implementations, the intent to interact can be a gesture toward the virtual object, a gesture associated with selection of the virtual object (e.g., a pointing gesture, a pinch gesture, etc.), and/or the like. In some implementations, the intent to interact can be by the hand on the opposite side of the body from where the virtual object is rendered, while in other implementations, the intent to interact can be by the hand on the same side of the body as where the virtual object is rendered. Further details regarding detecting an intent to interact with a virtual object by a hand of a user are described herein with respect to block 506 of Figure 5.

Action performance module 440 can, based on intent detection module 438 detecting the intent to interact with the virtual object by the hand, perform an action, associated with the virtual object, in the XR environment. In some implementations, the virtual object can be a first virtual object associated with a second virtual object, and the intent to interact with the first virtual object can cause the second virtual object to launch (e.g., an XR application) or be rendered (e.g., a sound being played, haptics being performed, a visual virtual object being displayed, etc.). In some implementations, the second virtual object can be a system-level menu (e.g., a menu of settings, options, and/or functions available to control the XR system and/or selected by the XR system) or an application-level menu (e.g., a menu of settings, options, and/or functions available to control an XR application executing in the XR environment and/or selected by the XR application).

In some implementations, an intent to interact with the virtual object can be associated with one or more other actions, such as initiating a recentering process of the XR system in the XR environment. In some implementations, the action performed by action performance module 440 can further be based on a duration of the intent to interact with the virtual object. For example, a "tap" of the virtual object having a duration of less than 500 ms can execute one action, while a "press and hold" of the virtual object having a duration more than 500 ms can execute a different action. Further details regarding performing an action, associated with a virtual object, in an XR environment are described herein with respect to block 508 of Figure 5.

Those skilled in the art will appreciate that the components illustrated in Figures 1-4 described above, and in each of the flow diagrams discussed below, may be altered in a variety of ways. For example, the order of the logic may be rearranged, substeps may be performed in parallel, illustrated logic may be omitted, other logic may be included, etc. In some implementations, one or more of the components described above can execute one or more of the processes described below.

Figure 5 is a flow diagram illustrating a process 500 used in some implementations for providing wrist- or forearm-locked virtual object accessibility in an artificial reality (XR) environment. In some implementations, process 500 can be performed upon detection of a wrist or forearm, in a real-world environment, within a threshold distance of a field-of-view of an XR system. In some implementations, some or all of process 500 can be performed by an XR system including one or more XR devices, e.g., an XR head-mounted display (HMD) (such as XR HMD 200 of Figure 2A and/or XR HMD 252 of Figure 2B), one or more external processing components, etc.

At block 502, process 500 can detect, in a real-world environment, a wrist and/or forearm, of a user, within a threshold distance of a field-of-view of the XR system. As used herein, the "wrist or forearm" can include anywhere on a user's arm within a threshold distance of the base of the hand and the elbow. In some implementations, process 500 can detect a particular position of the wrist or forearm, such as facing toward the body (and/or XR system) and/or away from the body (and/or XR system). As used herein, the "field-of-view" of the XR system can include a view visible by the user on the display of the XR system and/or an area in the real-world environment capturable by one or more cameras integral with or in operable communication with the XR system, which may or may not be displayed on the display of the XR system. In some cases, the hands, wrists, and/or forearms being on the peripherals of the user's field-of-view can be prone to accidental activations of a virtual object (as described below) and may suffer from degradation in hand tracking quality. Thus, in some implementations, by requiring that the wrist and/or forearm be within a threshold distance of the field-of-view of the XR system and/or user, system degradations and unnecessary virtual object rendering can be reduced or eliminated, thereby conserving power and processing resources on the XR system.

In some implementations, process 500 can detect the wrist or forearm of the user via one or more cameras integral with or in operable communication with the XR system. For example, process 500 can capture one or more images of the user's wrist or forearm in front of the XR system. In some implementations, process 500 can use a machine learning model to identify the wrist or forearm from the image(s). For example, process 500 can train a machine learning model with images capturing known wrists and/or forearms, such as images showing various users' wrists and/or forearms in various positions. Process 500 can identify relevant features in the images, such as edges, curves, and/or colors indicative of a wrist or forearm. Process 500 can train the machine learning model using these relevant features of known wrists and/or forearms, and, in some implementations position/pose information (e.g., facing toward or away from the XR system). Once the model is trained with sufficient data, process 500 can use the trained model to take relevant features for newly captured image(s) providing pose information. For example, process 500 can apply a machine learning system trained to determine a pose of the wrist and/or forearm in the environment or relative to the XR system, which can then be translated into the XR system's coordinate system.

At block 504, process 500 can, in response to the detecting of the wrist or forearm within the threshold distance of the field-of-view of the XR system, display a virtual object locked to a representation of the wrist or forearm of the user in the XR environment. In some implementations, and as noted above, process 500 can display the virtual object in response to detecting the wrist or forearm in a particular pose, such as facing the user and/or XR system (i.e., the inside of the wrist or forearm). In some implementations, process 500 can display the virtual object in response to detecting at least a threshold amount of a user's palm of the hand (e.g., a majority of the user's palm or greater than 50%), indicative of the wrist or forearm facing the user or XR device. In some implementations, however, process 500 can display the virtual object despite detecting that less than a majority of the user's palm is facing the user, such as when the hand is at least partially closed (e.g., one or more fingers are curled, a loose fist, etc.), without affecting visibility of the virtual object.

In some implementations, the representation of the wrist and/or forearm can be a virtual wrist and/or forearm correlated to at least a portion of the physical wrist and/or forearm, and, in some implementations, at least partially tracking the movement of the physical wrist and/or forearm in the real-world environment. In some implementations, process 500 can associate the physical wrist and/or forearm with the virtual wrist and/or forearm by mapping one or more of the identified features of the physical wrist and/or forearm to corresponding features of the virtual wrist and/or forearm. For example, process 500 can map an identified wristwatch to a virtual wristwatch on the user's wrist. In some implementations, process 500 can scale and/or resize captured features of the physical wrist and/or forearm to correlate to the virtual wrist and/or forearm, which can, in some implementations, have a default or predetermined size, shape, etc. In some implementations, process 500 can modify a "master" or generic virtual wrist and/or forearm template to visually match the physical wrist and/or forearm when associating the physical wrist and/or forearm with the virtual wrist and/or forearm. In some implementations, the virtual wrist and/or forearm can be three-dimensional (3D) to more realistically represent the physical wrist and/or forearm in the XR environment.

In some implementations, the representation of the wrist and/or forearm can be another virtual object mapped to the physical wrist and/or forearm, other than a virtual wrist and/or forearm, that at least partially tracks the movement of the physical wrist and/or forearm in the real-world environment. For example, the representation of the wrist and/or forearm can be a virtual animal's arm or leg and/or other non-humanoid virtual avatar or representation, which does not necessarily have to include wrists, hands, and/or fingers (e.g., an octopus tentacle). In some implementations, the virtual wrist and/or forearm can have one or more visual affordances applied when displayed on the XR system and based on the detecting, such as a fire or burning effect, a glow effect, etc. In some implementations, the representation of the wrist and/or forearm of the user, seen on the XR system, can be a pass-through or see-through view of user's actual wrist and/or forearm, such as in augmented reality or mixed reality.

The virtual object, locked to the representation of the wrist or forearm, can include any suitable displayable visual object, such as an at least partially computer-generated visual object. In some implementations, process 500 can select an appropriate size and/or dimensions for the virtual object, such that the virtual object provides an adequate hit target and interaction affordance. In some implementations, the virtual object can have a constant size unaffected by the proximity of the wrist or forearm to the XR system. In some implementations, however, the virtual object can realistically and dynamically grow larger or smaller as the wrist or forearm is brought closer or further from the user. In some implementations, process 500 can size the virtual object such that it does not interfere with the avatar embodiment of the user in the XR environment or intersect with virtual clothing of the avatar. In some implementations, the virtual object can be a three-dimensional circle having a constant depth.

In some implementations, the virtual object can include an interactable and/or selectable virtual object, such as a virtual button, a virtual toggle switch, a virtual slider, etc. In some implementations, the virtual object can be a first virtual object associated with launch of a second virtual object, as described further herein. In some implementations, the first virtual object can be a minimized and/or simplified version or representation of the second virtual object, such as an icon representative of a menu, application, action, etc., executable in the XR environment via selection of the first virtual object.

The virtual object can be "locked" to the representation of the wrist and/or forearm, as displayed on the XR system, in that the virtual object can be placed at a location on or within a threshold distance of the representation. Process 500 can optimize the location of the virtual object for ease of access, which, in some implementations, can be just above where the user's wrist meets their palm (e.g., at a particular distance onto the palm relative to where the wrist intersects with the palm). In some implementations, such placement can avoid real-world obstructions, such as jewelry or bulky clothing, and can minimize potential intersections with the user's virtual avatar in the XR environment. In some implementations, the position of the virtual object can be constant relative to the user's body (e.g., it does not shift from its position just above where the wrist meets the palm), and/or cannot be adjustable by the XR system, the user, and/or an application executing in the XR environment.

In some implementations, the virtual object can track movement of the wrist and/or forearm. Thus, if the virtual object is placed on the inside of the user's wrist and the user moves their wrist a particular distance to the left, the virtual object will follow the movement of the user's wrist the particular distance to the left and remain rendered at the same location on the user's wrist throughout. In some implementations, and comparatively, one or more other virtual objects in the XR environment can be "world-locked" (i.e., locked to one or more locations in the real-world and/or XR environment and unaffected by movement of the user's body) or "head-locked" (i.e., locked to a particular position on the display of the XR system, and thus following movement of the user's head in the case of a head-mounted display).

In some implementations, if process 500 no longer detects the wrist and/or forearm within the threshold distance of the field-of-view of the XR system, process 500 can cease display of the virtual object. In some implementations in which process 500 detects a particular pose of the wrist or forearm, process 500 can cease display of the virtual object when the particular pose is no longer detected. For example, process 500 can cease display of the virtual object when the inside of the wrist or forearm is no longer detected, and/or when a threshold amount of the user's palm is not detected (e.g., indicating that the user's wrist or forearm is no longer facing the user or XR system).

At block 506, process 500 can detect an intent to interact with the virtual object by a hand of the user. In some implementations, process 500 can identify the hand of the user in one or more manners similar to that described above relative to identifying the user's wrist and/or forearm, such as by applying object recognition techniques, object detection techniques, machine learning algorithms, etc. In some implementations, the intent to interact can be a proximity of the hand to a virtual object or a gesture toward the virtual object by the hand (e.g., within a specified distance). Process 500 can identify the gesture toward the virtual object by the hand by, for example, using one or more cameras integral with or in operable communication with the XR device. The one or more cameras can capture images of the physical hand moving toward a location in the real-world environment mapped to a virtual location in the XR environment in which the virtual object is located. In some implementations, process 500 can identify a gesture away from the user and toward a virtual object using one or more depth sensors integral with or in operable communication with the XR system. In some implementations, process 500 can identify a gesture of the hand via one or more other sensors and/or devices, such as an electromyography (EMG) sensor integrated into a wearable device positioned on or within a threshold distance of the user's wrist.

In some implementations, the gesture toward the virtual object can be a motion of the physical hand. In some implementations, the gesture can include a particular posture of the physical hand, such as a pointing posture, an open hand posture, a grabbing posture, etc. In some implementations, process 500 can identify the posture of the physical hand similarly to how process 500 identifies the physical hand, such as by capturing images and performing object recognition, using machine learning models trained on images of particular postures, etc. An exemplary interaction can include a tap gesture on or within a threshold distance of the virtual object. In some implementations, the actual hit target of the virtual object can be a particular amount larger than the virtual object's visual representation, such that an interaction within a threshold distance of the visual representation can be interpreted by process 500 as an intent to interact. In some implementations, process 500 can determine the intent to interact upon a particular motion, gesture, etc. being held longer than a threshold amount of time (e.g., more than 1 second). Although described primarily herein as identifying the intent to interact with the virtual object by the user's hand, it is contemplated that the intent to interact can alternatively or additionally be made via one or more other methods, such as an audible announcement to interact with the virtual object captured by one or more microphones of the XR system and processed using speech recognition and/or natural language techniques.

In some implementations, the intent to interact can be based on an action or gesture of the hand on the opposite side of the body as the wrist or forearm where the virtual object is rendered. For example, a virtual button can be rendered on the inside of the left wrist, and the intent to interact can be a pressing motion of a finger of the right hand on the virtual button. In some implementations, the intent to interact can be based on an action or gesture of the hand on the same side of the body as the wrist or forearm where the virtual object is rendered. For example, a virtual button can be rendered on the inside of the left wrist, and the intent to interact can be a pinch gesture made by the left hand (e.g., bringing the fingertip of the pointer finger and/or other finger within a threshold distance of the fingertip of the thumb of the left hand).

In some implementations, the XR environment can include interactive content. In some implementations, process 500 can cease or prevent rendering at least a portion of the interactive content, within a threshold distance of the virtual object, while the virtual object is being displayed. Thus, process 500 can prevent inadvertent interactions with other portions of the XR environment proximate to the virtual object when the user may be intending to interact with the virtual object. In some implementations, process 500 can cease or prevent rendering of particular status updates and/or signals (e.g., critical updates, such as battery low, emergency alerts, etc.) within a threshold distance of the virtual object, thus preventing occlusion of such updates and/or signals by the virtual object. In some implementations, process 500 can relocate particular status updates and/or signals outside of the threshold distance of the virtual object.

In some implementations, if process 500 does not detect an intent to interact with the virtual object within a specified period of time, process 500 can cease rendering of the virtual object, regardless of whether other conditions for display of the virtual object are still met (e.g., the wrist is still facing the user). In some implementations, process 500 can transition rendering of the virtual object from full rendering to no rendering over a period of time, such as by gradually fading the virtual object to zero opacity. Thus, in some implementations, distraction of the virtual object can be minimized when the user does not intend to interact with it and/or did not intend to make the virtual object appear.

At block 508, process 500 can, based on the detecting of the intent to interact with the virtual object by the hand, perform an action, associated with the virtual object, in the XR environment. In some implementations, the action to perform can be identified based on a predetermined, stored, and/or known association between the virtual object and a particular action. For example, the action associated with the virtual object can be mapped to an action associated with a physical button on a controller of the XR system (e.g., controller 276A and/or 276B of Figure 2B). In some implementations, the virtual object can be similar in design to the associated physical button of the controller, thereby providing parity between the virtual object and the physical button on the controller. In some implementations, process 500 can dynamically determine the action to perform, associated with the virtual object, based on one or more contextual factors. For example, process 500 can access a lookup table and/or apply a machine learning algorithm to determine what action to perform based on a particular application and/or type of application executing in the XR environment (or multiple applications), one or more virtual objects rendered in the XR environment, available actions that can be performed within the XR environment, most frequent or common actions to be performed in the XR environment, etc.

In some implementations, process 500 can select which action to be performed based on one or more characteristics of the interaction with the virtual object, such as a duration of the interaction. For example, the user pressing a virtual button for less than a threshold amount of time (e.g., less than 1 second) can automatically cause a first action to be performed, while the user pressing the virtual button for greater than the threshold amount of time (e.g., 1 second or longer) can automatically cause a different action to be performed. In some implementations, the action to be performed can alternatively or additionally be based on which wrist and/or forearm is detected (e.g., right wrist versus left wrist, whether it is the wrist on the same side as the user's dominant hand, etc.). In some implementations, process 500 can determine the user's dominant hand based on a user profile in which the user has manually selected their dominant hand, by querying the user to input which hand is the dominant hand, by applying a machine learning algorithm and/or statistical techniques to user actions within the XR environment to determine which hand is used most frequently or for the most significant tasks, etc.

In some implementations, the action can include displaying a second virtual object, associated with the first virtual object, in the XR environment. The second virtual object can include any renderable virtual object, such as a visual virtual object, and audio virtual object, a video virtual object, a haptics virtual object, etc. In some implementations, the second virtual object can be a virtual menu providing access to one or more functions of the XR system (e.g., a "system menu") and/or one or more functions of an XR application executing in the XR environment (e.g., an "application menu). In some implementations, a system menu can be associated with a virtual object displayed on one hand's wrist (e.g., the left wrist), while an application menu can be associated with the other hand's wrist (e.g., the right wrist). In some implementations, the XR application executing in the XR environment can define any of one or more actions that are performed based on selection of the second virtual object other than display of a virtual application menu, such as activating pass-through, traveling to a different XR environment managed by the XR application, etc.

In some implementations, the action can include recentering a view of the XR environment, rendered on the XR system, based on a head pose of the user. In some implementations, the recentering of the view can be performed upon completion of a countdown, based on the head pose of the user at the end of the countdown. For example, based on a "long press" of a virtual button (e.g., pressing greater than 2 seconds), process 500 can display a timed countdown (e.g., 5, 4, 3, 2, 1, 0 seconds). During this countdown, the user can move and reorient their head. When the countdown reaches 0, process 500 can recenter the XR environment about the head pose of the user captured at 0. In some implementations, process 500 must detect the intent to interact throughout the countdown for the recentering process to continue. In other words, if the intent to interact is no longer detected during the countdown (e.g., a virtual button press is released before the countdown reaches 0), the recentering process can cancel, and the XR environment can remain centered at its location prior to initialization of the recentering process.

In some implementations, process 500 can determine a subsequent intent to interact with the virtual object, which can be the same or different motion, gesture, etc. as the initial intent to interact. In some implementations, the subsequent intent to interact can cause process 500 to cease performance of the action associated with the virtual object. For example, a first tap on a virtual button can cause a virtual menu to appear, and a second tap on the virtual object can cause the virtual menu to disappear. In some implementations, process 500 can cease performance of the action associated with the virtual object based on an intent to interact with the virtual object no longer being detected, e.g., a pinch gesture can cause a virtual menu to appear, and opening of the hand (and releasing of the pinch gesture) can cause the virtual menu to disappear.

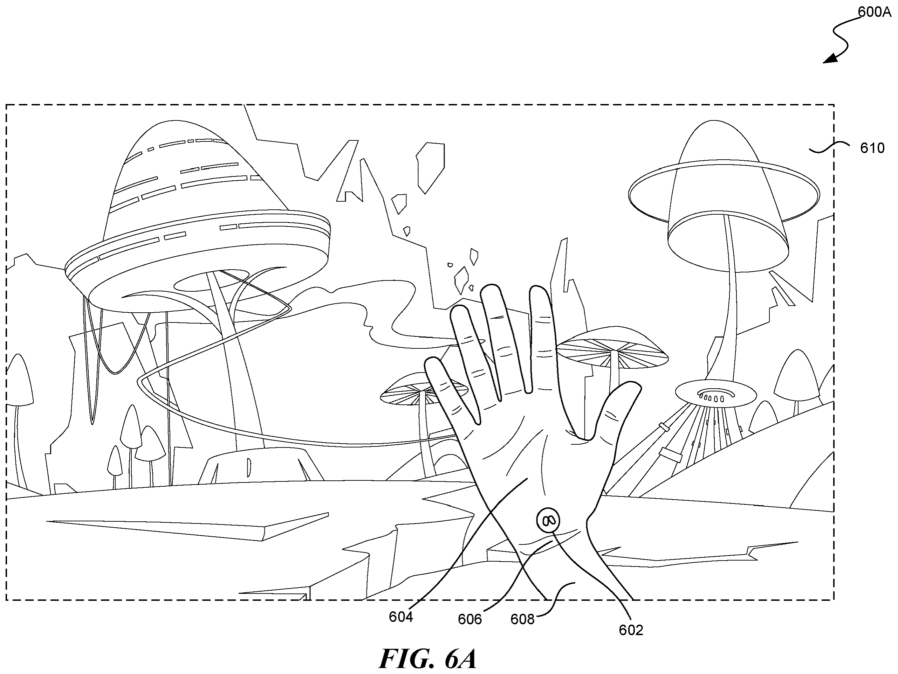

Figure 6A is a conceptual diagram illustrating an example view 600A, on an XR system, of a virtual system button 602 displayed, in an XR environment 610, when a user's wrist (corresponding to wrist representation 606) faces the user. The XR system can detect the wrist and/or the forearm (corresponding to forearm representation 608) are within a threshold distance of the field-of-view of the XR system (e.g., view 600A) by, for example, capturing images and applying object recognition techniques to such images. Alternatively or additionally, the XR system can further detect that the wrist faces the user by determining that a majority of the user's palm (corresponding to palm representation 604) is within the field-of-view of the XR system. In response to detecting that the user's wrist is within view 600A, the XR system can display virtual system button 602 at a location just above wrist representation 606 onto palm representation 604 (i.e., just above where wrist representation 606 meets palm representation 604). In this example, virtual system button 602 can be displayed when the wrist of the right hand faces the user.

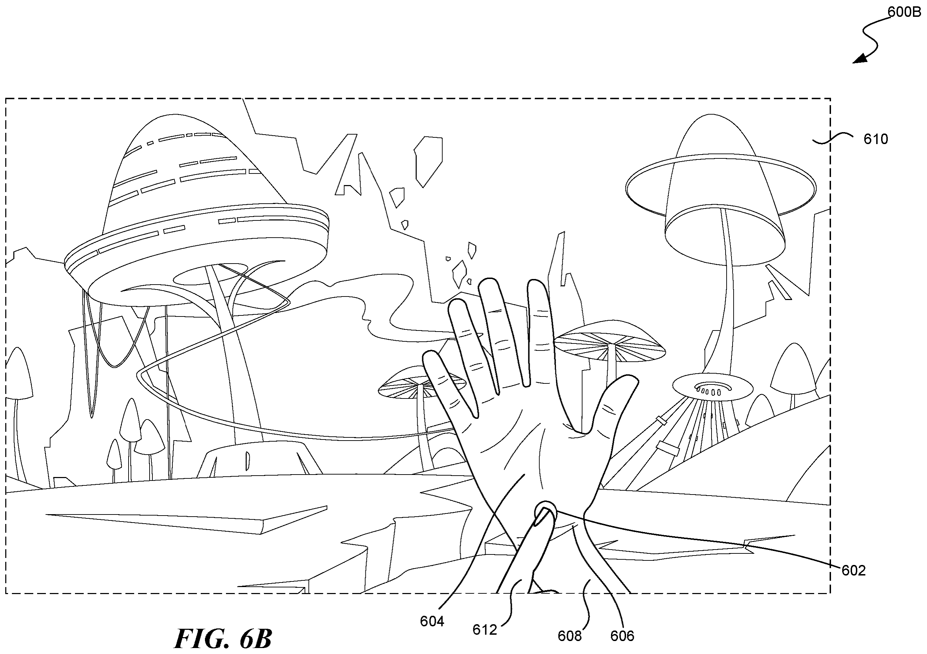

Figure 6B is a conceptual diagram illustrating an example view 600B, on an XR system, of a user interacting with a virtual system button 602 displayed when the user's wrist faces the user. The XR system can detect that the user used their pointer finger (corresponding to pointer finger representation 612) of the opposite hand to tap virtual system button 602. Based on the length of the tap (e.g., less than 500 ms), the XR system can perform one or more actions associated with interaction with virtual system button 602 via such a tap.

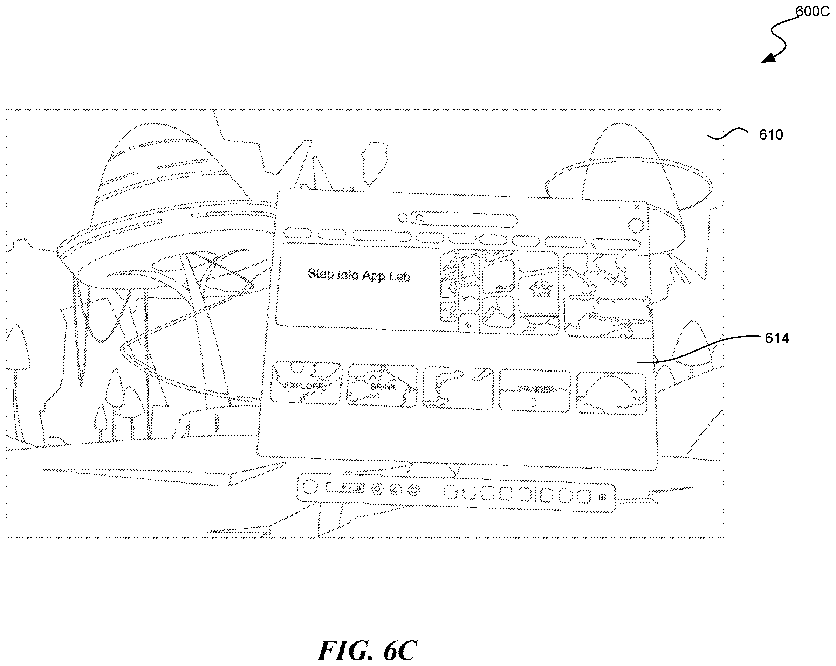

For example, Figure 6C is a conceptual diagram illustrating an example view 600C, on an XR system, of a virtual system menu 614 displayed based on a user interaction with a virtual system button 602. Virtual system menu 614 can be a virtual menu, controlled and/or managed by the XR system, of options, settings, functions, and/or applications. In Figure 6C, the user has removed their wrist from view 600C. However, in this example, virtual system menu 614 can persist in view 600C until a further interaction is made, such as by moving the wrist back into the field-of-view of the XR system (causing wrist representation 606 and virtual system button 602 to again be displayed), and the user again using their pointer finger of the opposite hand to tap virtual system button 602. Virtual system menu 614 can then be removed from view 600C.

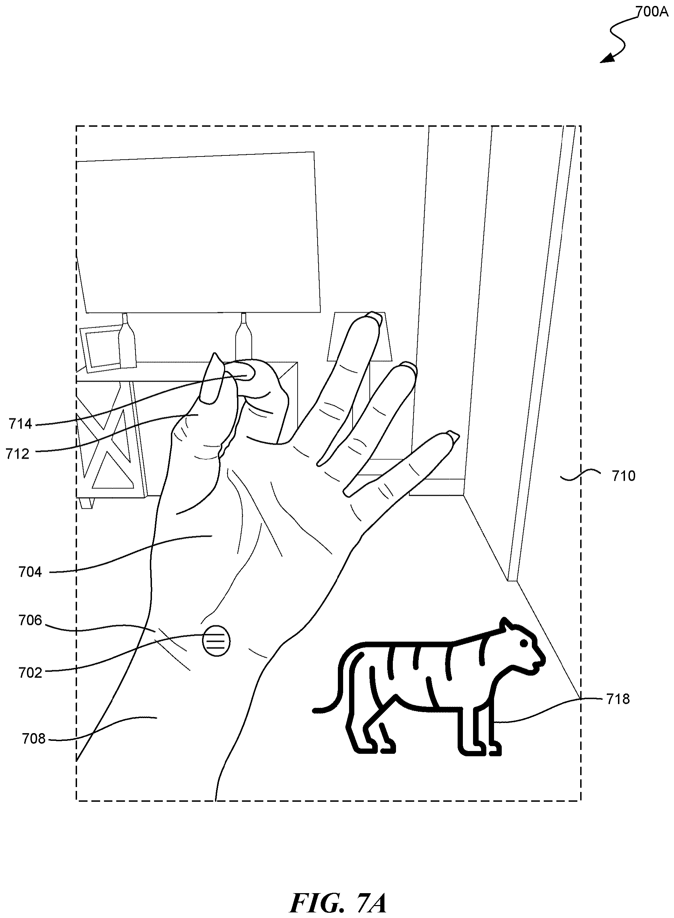

Figure 7A is a conceptual diagram illustrating an example view 700A, on an XR system, of a user making a pinch gesture indicative of an intent to interact with a virtual application button 702 displayed, in an XR environment 710, when a user's wrist 706 faces the user. The XR system can detect wrist 706, forearm 708, and/or palm 704 within a threshold distance of its field-of-view (and, in this example, visible in view 700A in pass-through). In some implementations, the XR system can further determine that wrist 706, forearm 708, and/or palm 704 faces the user, such as by determining that more than a threshold percentage of wrist 706, forearm 708, and/or palm 704 is visible in view 700A. In response to detecting that wrist 706, forearm 708, and/or palm 704 is within view 700A, the XR system can display virtual application button 702 at a location where wrist 706 meets palm 704. In this example, virtual application button 702 can be displayed when the wrist of the left hand faces the user.

The XR system can further detect that the user is making a pinch gesture, e.g., bringing a portion of thumb 712 and a portion of pointer finger 714 within a threshold distance of each other. In this example, the pinch gesture is made with the left hand, on the same side of the user's body in which virtual application button 702 is displayed. Based on the length of the pinch gesture being held (e.g., less than 1 second), the XR system can interpret such a pinch gesture as an intent to interact with virtual application button 702, and can perform one or more actions associated with such an intent. In some implementations, an XR application executing in XR environment 710 (e.g., the application controlling rendering of virtual object 718) can define what action(s) are taken upon selection of virtual application button 702.

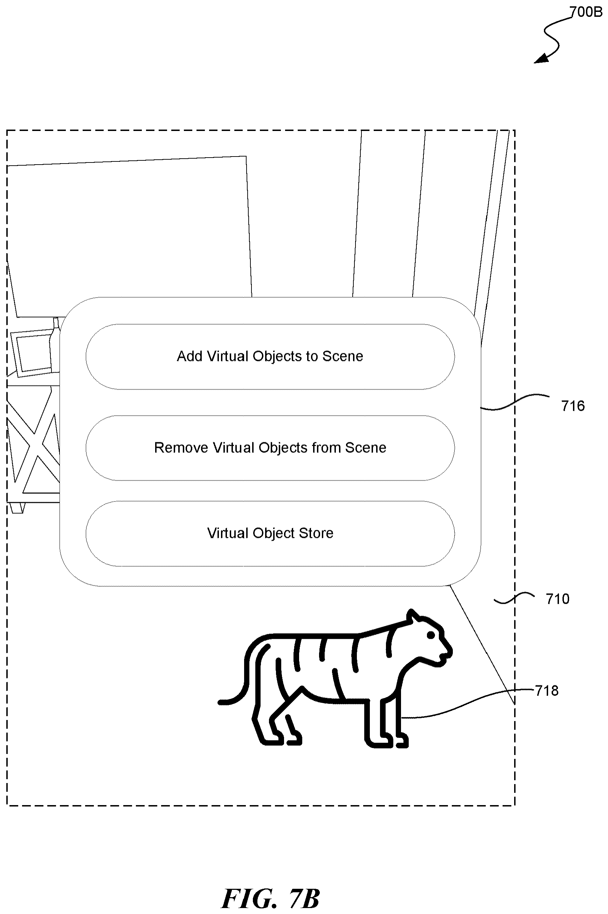

Figure 7B is a conceptual diagram illustrating an example view 700B, on an XR system, of a virtual application menu 716 displayed based on a detected intent to interact with a virtual application button 702. Virtual application menu 716 can be a virtual menu, controlled and/or managed by the XR application executing in the XR environment 710, of selected options, settings, and/or functions available relative to the application. In Figure 7B, the user has removed their wrist 706 from view 700B. However, in this example, virtual application menu 716 can persist in view 700B until a further interaction is made, such as by moving wrist 706 back into the field-of-view of the XR system, and again making a pinch gesture. Virtual application menu 716 can then be removed from view 600C. In another example, however, virtual application menu 716 can only persist as long as the pinch gesture is held within view 700B/

Several implementations of the disclosed technology are described above in reference to the figures. The computing devices on which the described technology may be implemented can include one or more central processing units, memory, input devices (e.g., keyboard and pointing devices), output devices (e.g., display devices), storage devices (e.g., disk drives), and network devices (e.g., network interfaces). The memory and storage devices are computer-readable storage media that can store instructions that implement at least portions of the described technology. In addition, the data structures and message structures can be stored or transmitted via a data transmission medium, such as a signal on a communications link. Various communications links can be used, such as the Internet, a local area network, a wide area network, or a point-to-point dial-up connection. Thus, computer-readable media can comprise computer-readable storage media (e.g., "non-transitory" media) and computer-readable transmission media.

Reference in this specification to "implementations" (e.g., "some implementations," "various implementations," "one implementation," "an implementation," etc.) means that a particular feature, structure, or characteristic described in connection with the implementation is included in at least one implementation of the disclosure. The appearances of these phrases in various places in the specification are not necessarily all referring to the same implementation, nor are separate or alternative implementations mutually exclusive of other implementations. Moreover, various features are described which may be exhibited by some implementations and not by others. Similarly, various requirements are described which may be requirements for some implementations but not for other implementations.

As used herein, being above a threshold means that a value for an item under comparison is above a specified other value, that an item under comparison is among a certain specified number of items with the largest value, or that an item under comparison has a value within a specified top percentage value. As used herein, being below a threshold means that a value for an item under comparison is below a specified other value, that an item under comparison is among a certain specified number of items with the smallest value, or that an item under comparison has a value within a specified bottom percentage value. As used herein, being within a threshold means that a value for an item under comparison is between two specified other values, that an item under comparison is among a middle-specified number of items, or that an item under comparison has a value within a middle-specified percentage range. Relative terms, such as high or unimportant, when not otherwise defined, can be understood as assigning a value and determining how that value compares to an established threshold. For example, the phrase "selecting a fast connection" can be understood to mean selecting a connection that has a value assigned corresponding to its connection speed that is above a threshold.

As used herein, the word "or" refers to any possible permutation of a set of items. For example, the phrase "A, B, or C" refers to at least one of A, B, C, or any combination thereof, such as any of: A; B; C; A and B; A and C; B and C; A, B, and C; or multiple of any item such as A and A; B, B, and C; A, A, B, C, and C; etc.

Although the subject matter has been described in language specific to structural features and/or methodological acts, it is to be understood that the subject matter defined in the appended claims is not necessarily limited to the specific features or acts described above. Specific embodiments and implementations have been described herein for purposes of illustration, but various modifications can be made without deviating from the scope of the embodiments and implementations. The specific features and acts described above are disclosed as example forms of implementing the claims that follow. Accordingly, the embodiments and implementations are not limited except as by the appended claims.

Any patents, patent applications, and other references noted above are incorporated herein by reference. Aspects can be modified, if necessary, to employ the systems, functions, and concepts of the various references described above to provide yet further implementations. If statements or subject matter in a document incorporated by reference conflicts with statements or subject matter of this application, then this application shall control.

## Claims

1. A method for providing wrist- or forearm-locked virtual object accessibility in an artificial reality (XR) environment, the method comprising:
detecting, by an XR system and in a real-world environment, a wrist or forearm, of a user, within a threshold distance of a field-of-view of the XR system;
in response to the detecting of the wrist or forearm within the threshold distance of the field-of-view of the XR system, displaying a first virtual object locked to a representation of the wrist or forearm of the user in the XR environment;
detecting an intent to interact with the first virtual object by a hand of the user; and
based on the detecting of the intent to interact with the first virtual object by the hand, displaying a second virtual object, associated with the first virtual object, in the XR environment.

2. The method of claim 1, wherein the second virtual object is a virtual menu providing access to one or more functions of the XR system or one or more functions of an XR application executing in the XR environment.

3. The method of claim 1 or claim 2, wherein the hand is on a different arm of a body, of the user, from the wrist; and optionally, wherein the detected intent to interact is a tap by the hand on the first virtual object.

4. The method of claim 1 or claim 2,
wherein the hand is on a same arm of a body, of the user, as the wrist or forearm, and
wherein the detected intent is based on a gesture made by the hand, and optionally, wherein the gesture is a pinch gesture by the hand.

5. The method of any preceding claim,
wherein detecting the intent to interact with the first virtual object includes determining a duration of the intent to interact with the first virtual object, and
wherein the method further comprises:
selecting the second virtual object based on the duration of the interaction with the first virtual object;
and optionally further:
wherein the determining the duration of the intent to interact includes determining that the duration exceeds a threshold, and
wherein the selected second virtual object is a rendering of the XR environment recentered based on a position of a head of the user while the intent to interact is detected.

6. The method of any preceding claim, wherein the first virtual object is mapped to a physical button on a controller of the XR system.

7. The method of any preceding claim,
wherein the intent to interact with the first virtual object is a first intent to interact, and wherein the method further comprises:
detecting a second intent to interact with the first virtual object by the hand of the user; and
based on the detecting the second intent to interact with the first virtual object, ceasing display of the second virtual object in the XR environment.

8. The method of any preceding claim, wherein a location of the displayed first virtual object is locked to a location based on a location of the representation of the wrist in the XR environment.

9. The method of any preceding claim, wherein the first virtual object is selected based on a determination of which wrist or forearm is detected.

10. The method of any preceding claim, wherein the first virtual object is displayed further based on detection of greater than a threshold amount of a palm of the user facing the XR system.

11. The method of any preceding claim,
wherein the XR environment includes interactive content, and
wherein the method further comprises:
ceasing rendering of a portion of the interactive content, within a threshold distance of the first virtual object, while the first virtual object is displayed.

12. A computer-readable storage medium storing instructions, for providing wrist- or forearm-locked virtual object accessibility in an artificial reality (XR) environment, the instructions, when executed by a computing system, cause the computing system to:
detect, by an XR system and in a real-world environment, a wrist or forearm, of a user, within a threshold distance of a field-of-view of the XR system;
in response to the detecting of the wrist or forearm within the threshold distance of the field-of-view of the XR system, display a virtual object locked to a representation of the wrist or forearm of the user in the XR environment;
detect an intent to interact with the virtual object by a hand of the user; and
based on the detecting of the intent to interact with the virtual object by the hand, perform an action, associated with the virtual object, in the XR environment.

13. The computer-readable storage medium of claim 12, wherein the action includes recentering a view of the XR environment, on the XR system, based on a head pose of the user; and optionally:
the recentering of the view is performed, upon completion of a countdown, based on the head pose of the user at the end of the countdown; and/ or
the action includes initiating a recentering process while the intent to interact is detected, and the recentering process is canceled when the intent to interact is no longer detected.

14. A computing system for providing wrist- or forearm-locked virtual object accessibility in an artificial reality (XR) environment, the computing system comprising:
one or more processors; and
one or more memories storing instructions that, when executed by the one or more processors, cause the computing system to:
detect, by an XR system and in a real-world environment, a wrist or forearm, of a user, within a threshold distance of a field-of-view of the XR system;
in response to the detecting of the wrist or forearm within the threshold distance of the field-of-view of the XR system, display a virtual object locked to a representation of the wrist or forearm of the user in the XR environment;
detect an intent to interact with the virtual object by a hand of the user; and
based on the detecting of the intent to interact with the virtual object by the hand, perform an action, associated with the virtual object, in the XR environment.

15. The computing system of claim 14,
wherein the virtual object is a first virtual object, and
wherein the action includes displaying a second virtual object, associated with the first virtual object, in the XR environment.
